# EUROPÄISCHE PATENTANMELDUNG

(11) **EP 2 295 290 A1**
(43) Veröffentlichungstag der Anmeldung: **16.03.2011**
(21) Anmeldenummer: 10450141.6
(22) Anmeldetag: 07.09.2010
(51) Int. Cl.: B60P 7/08

(54) **Vorrichtung, insbesondere zur Fixierung der Vorratswickel oder Leporellopackungen von Spanngurten**

(30) Priorität: 09.09.2009 AT 14162009
(71) Anmelder: Breitenthaler, Ferdinand, 4893 Zell am Moos (AT)
(72) Erfinder: Breitenthaler, Ferdinand, 4893 Zell am Moos (AT)
(74) Vertreter: Hübscher, Helmut

(57) **Zusammenfassung**

Es wird eine Vorrichtung (1, 4), insbesondere zur Fixierung der Vorratswickel oder Leporellopackungen von Spanngurten (6) zur Lastsicherung beim Transport und zum Zusammenhalten bzw. zur Fixierung von Einzelelementen vorgeschlagen, die ein mit dem einen Endbereich an einer Halterung (8) befestigbares, vorzugsweise einen runden Querschnitt aufweisendes gummielastisches Band insbesondere Gummiseil (4) aufweist, das um den zu sichernden Vorratsteil (6) der Spanngurte bzw. die Einzelelemente spannbar und in der Spannstellung bei als Handhabe dienendem anderem Endbereich (4a) in eine Aufnahmevertiefung (9) eines Halteelementes (7) einhängbar ist und dass die Lichtweite der Aufnahmevertiefung (9) im Fixierungsbereich kleiner als der Durchmesser des entspannten Bandes bzw. Seiles (4) gewählt ist, sodass sich dieses in der Aufnahmevertiefung (9) festklemmt, wobei sich der gespannt bleibende Teil des Seiles 4 in seiner Länge stufenlos an den jeweiligen Sicherungsfall anpasst.

## Beschreibung

Die Erfindung betrifft eine Vorrichtung, insbesondere zur Fixierung der Vorratswickel oder Leporellopackungen von Spanngurten zur Lastsicherung beim Transport und zum Zusammenhalten bzw. zur Fixierung von Einzelelementen.

Bei Transport mit Lastfahrzeugen ist es üblich, sperrige Güter oder Güter, die durch Aufbauten des Lastfahrzeuges keinen ausreichenden Halt auf der Ladefläche bekommen durch einen oder mehrere Spanngurten zu sichern. Bekannte Ausführungen sehen vor, die Spanngurte an dem einen Rand der Ladefläche oder an der einen Seite des Lastfahrzeuges zu befestigen und über die zu sichernde Last zur anderen Seite zu führen und dort mittels eines Spannschlosses oder einer sonstigen Spanneinrichtung zu befestigen. Je nach Größe und Form der Last ergeben sich für die Spanngurte verschiedene Spannlängen, wobei das überschüssige Gurtmaterial, bzw. bei der Leerfahrt das gesamte Gurtmaterial in Vorratswickeln oder Leporellopackungen verstaut mitgeführt wird. Diese Gurtvorräte müssen während der Fahrt entsprechend gesichert werden. Im einfachsten Fall werden für die Sicherung um die Wickel bzw. Packungen geschlungene Drähte oder Kabelbänder verwendet die nach dem Gebrauch abgeschnitten werden müssen, wobei nach dem Festspannen der Gurte wieder die verbleibenden Gurtvorräte zu sichern sind und neues Sicherungsmaterial verwendet werden muss. Es wurde auch schon vorgeschlagen statt der Klebe- oder Kabelbänder andere Bänder vorzusehen, die in der Haltestellung durch zusammenwirkende Klettverschlüsse gesichert sind. Auch diese Form der Sicherung ist unbefriedigend, da sich die tatsächlichen Spannlängen, wie schon oben erwähnt, ändern, sodass es ungünstig wäre entsprechend lange Klettauflagen an den Bändern zu verwenden. Über dies verlieren solche Klettbänder bereits nach kurzem Gebrauch durch äußere Einflüsse die notwendige Haltewirkung. Auch kann keine befriedigende Vorspannung der Haltemittel erzielt werden.

Für das Zusammenhalten von Einzelelementen, z.B. kleinerer Stangen, werden ähnliche Befestigungen, wie oben beschrieben, verwendet. Bei kürzeren Elementen können auch Gummiringe eingesetzt werden, die vom Ende her auf das jeweilige Bündel aufgeschoben werden. Schließlich ist es zur Lastsicherung auch bekannt mit einem Ende befestigte und mit dem anderen Ende in Spannschließen einführbare Gurte oder Bänder zu verwenden.

Aufgabe der Erfindung ist die Schaffung einer Vorrichtung der eingangs genannten Art, die mit einfachen Mitteln für alle erwähnten Anwendungsfälle eine dauerhafte Sicherung der Vorratswickel der Spanngurte bzw. ein sicheres Zusammenhalten von Einzelelementen gewährleistet und dabei an verschiedene Wickel- oder Packungsgrößen bzw. Umfanggrößen von zusammenzufassenden Einzelelementen angepasst werden kann.

Die Erfindung besteht im Wesentlichen darin, dass die Vorrichtung ein mit dem einen Endbereich an einer Halterung befestigbares, vorzugsweise einen runden Querschnitt aufweisendes gummielastisches Band insbesondere Gummiseil aufweist, das um den zu sichernden Vorratsteil der Spanngurte bzw. die Einzelelemente spannbar und in der Spannstellung bei als Handhabe dienendem anderen Endbereich in eine Aufnahmevertiefung eines Halteelementes einhängbar ist und dass die Lichtweite der Aufnahmevertiefung im Fixierungsbereich kleiner als der Durchmesser des entspannten Bandes bzw. Seiles gewählt ist, sodass sich dieses in der Aufnahmevertiefung festklemmt.

Die wesentliche Erkenntnis der Erfindung besteht darin, dass ein entsprechendes Gummiband bzw. Gummiseil im Spannzustand seinen Durchmesser verringert und daher in die Aufnahmevertiefung eingehängt werden kann. Wird das Halteende des Bandes bzw. Seiles losgelassen, so bildet sich in der Aufnahmevertiefung eine Verdickung und im freien Außenbereich des Seiles eine Vergrößerung des Durchmessers auf den entspannten Bereich, wodurch die Verbindung zwischen Seil und Halterung durch einfaches Anziehen und Einhängen des Seiles in die Aufnahmevertiefung herstellbar und durch neuerliches Anziehen am heraushängenden Seil auch wieder lösbar ist. Für manche Anwendungsfälle kann man das Gummiband bzw. -seil ortsfest in einem Fahrzeug anbringen und, nachdem das Seil über die zu sichernde Last gespannt wurde, in die Aufnahmevertiefung einhängen. In jedem Fall ist eine stufenlose Anpassung der gespannt bleibenden, die Fixierung bewirkenden Länge des Seiles an den jeweiligen Anwendungsfall gewährleistet. Die Vorspannung selbst ist vom Verhältnis der Lichtweite der Aufnahmevertiefung vom Durchmesser des entspannten Bandes bzw. Seiles abhängig und kann also durch die Größe dieser Aufnahmevertiefung vorbestimmt werden. Bei Elementen die im Bündel zusammengehalten werden müssen, können eine Seilhalterung und Aufnahmevertiefung zur Fixierung des gespannten Seilbereiches in einem entsprechenden Element nahe beisammen angeordnet werden. Es ist dann auch möglich, das Band bzw. Seil je nach Dicke des Bündels in einer oder mehreren Windungen um letztes zu legen.

Nach einer Weiterbildung der Erfindung ist im Sinne der zuletzt gemachten Erklärungen ein vorzugsweise einteiliger Haltebügel vorgesehen, der an einem Ende die Halterung für das Seil bzw. Band aufweist und im anderen Endbereich mit der Aufnahmevertiefung für das gespannt einzulegende Band bzw. Seil versehen ist. Dieser Haltebügel kann je nach Verwendungszweck aus verschiedenen Materialien und in verschiedener Form und Größe hergestellt werden.

Zur Sicherung der Vorratswickel oder Leporellopackungen von Spanngurten der eingangs genannten Art wird eine Ausführung bevorzugt, nach der der Haltebügel aus einem Formstück aus entsprechend steifem Stangen- oder Drahtmaterial besteht, bei dem an dem einen Ende die Halterung und am anderen Ende eine die Aufnahmevertiefung bestimmende z. B. V- oder U-Hakenförmige Ausbiegung vorgesehen ist, wobei die Länge des Haltebügels zwischen Aufnahmevertiefung und Ausbiegung der Gurtbreite entspricht.

Die Halterung kann ebenfalls durch eine Ausbiegung des Formstückes bestimmt werden und die Stange bzw. der Draht weist im Endbereich der Ausbiegung ein an die Vertiefung anschließendes schräg nach außen weisendes Schenkelende als Einführungshilfe für das gespannte Gummiseil auf.

Weitere Einzelheiten und Vorgangsweisen des Erfindungsgegenstandes entnimmt man der nachfolgenden Zeichnungsbeschreibung.
In der Zeichnung ist der Erfindungsgegenstand beispielsweise veranschaulicht.

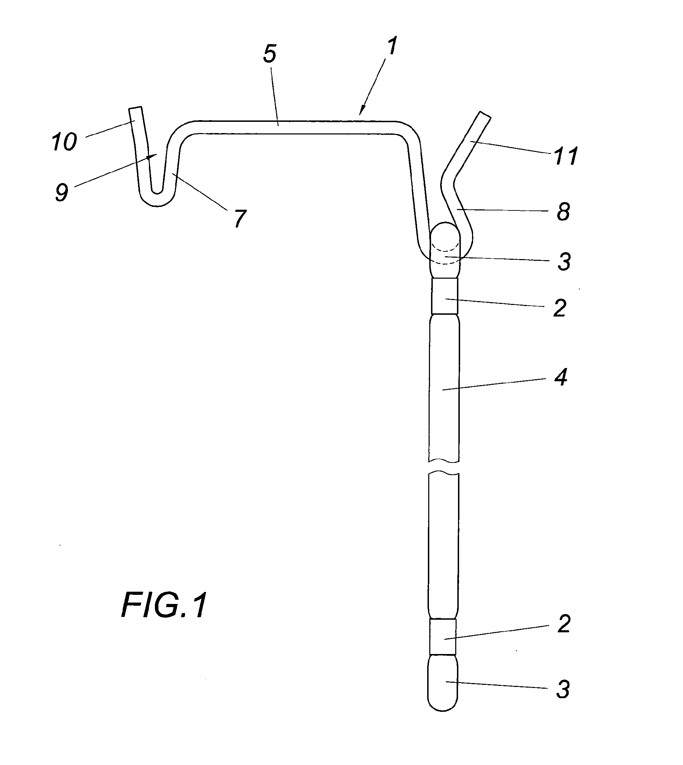

- Fig. 1: eine erfindungsgemäße Vorrichtung zum Zusammenhalten der Vorrats- wickel von Spanngurten zur Lastsicherung in Seitenansicht.
- Fig. 2: die Vorrichtung nach Fig. 1 in der Einsatzstellung bei nur strichpunktiert angedeutetem Vorratswickel und
- Fig. 3: eine Seitenansicht zu Fig. 2.

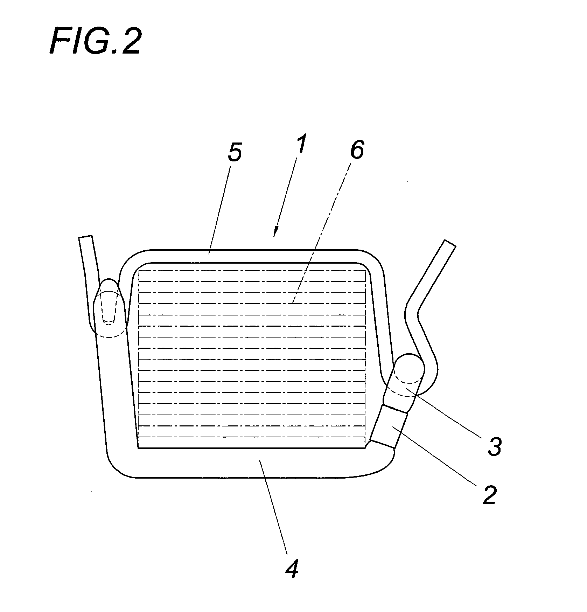

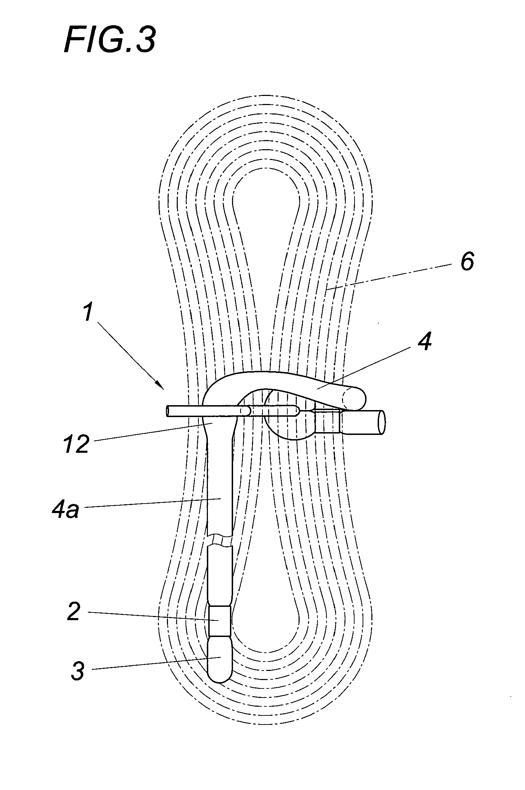

Die erfindungsgemäße Vorrichtung besteht aus einem Haltebügel 1 und einem mehraderigen, mit einem Gewebemantel und einer durch eine Klemme 2 bestimmten Endöse 3 ausgestatteten Gummiseil 4, dessen Länge den jeweiligen Verwendungsweck in der Form angepasst ist, dass sie der maximal zur Sicherung benötigten Länge entspricht. Auch das freie Ende des Seiles 4 kann zur Erleichterung der Handhabung mit einer Endöse 3 versehen sein. Der Haltebügel 1 besitzt einen Mittelteil 5, dessen gerade Länge der Breite eines zu sichernden Gurtes bzw. Gurtwickels 6 (in den Fig. 2 und 3 angedeutet) entspricht. An beiden Enden des Mittelteiles 5 sind nach der Außenseite hakenförmige Ausbiegungen 7, 8 vorgesehen, wobei die Ausbiegung 8 vorzugsweise zum Einhängen der Öse 3 dient und die Ausbiegung 2 sich V-förmig nach unten verjüngt und in dem Bereich zwischen gedachter Verlängerung des Mittelteiles und der Ösenbiegung eine kleinere Lichtweite 9 aufweist als dem Durchmesser des runden Seiles 4 entspricht. Das Formstück 1 ist vorzugsweise aus einer runden Stange aus rostfreiem Stahl hergestellt. Die freien Enden 10, 11 der Ausbiegungen 7, 8 sind zur Erleichterung der Seileinhängung schräg nach außen weisende Schenkel.

Wie sich insbesondere aus den Fig. 2 und 3 ergibt, wird das Seil 4 nach Auflegen des Haltebügels 1 mit seinem Mittelteil 5 auf den Wickel 6 um diesen geschlungen und im vorgespannten Zustand in die Vertiefung 9 eingelegt. Wird nun das freie Ende 4a losgelassen, so bildet das Seil einen Wulst 12 der ein weiteres Durchziehen durch die Vertiefung 9 verhindert. Größere Längen des freien Seilstückes 4a können noch ein- oder zweimal um den Wickel 6 geschlungen und dann durch Einführen in die Ausbiegung 8 gesichert werden.

## Patentansprüche

1. Vorrichtung (1, 4), insbesondere zur Fixierung der Vorratswickel oder Leporellopackungen von Spanngurten (6) zur Lastsicherung beim Transport und zum Zusammenhalten bzw. zur Fixierung von Einzelelementen, **dadurch gekennzeichnet, dass** die Vorrichtung ein mit dem einen Endbereich an einer Halterung (8) befestigbares, vorzugsweise einen runden Querschnitt aufweisendes gummielastisches Band insbesondere Gummiseil (4) aufweist, das um den zu sichernden Vorratsteil (6) der Spanngurte bzw. die Einzelelemente spannbar und in der Spannstellung bei als Handhabe dienendem anderem Endbereich (4a) in eine Aufnahmevertiefung (9) eines Halteelementes (7) einhängbar ist und dass die Lichtweite der Aufnahmevertiefung (9) im Fixierungsbereich kleiner als der Durchmesser des entspannten Bandes bzw. Seiles (4) gewählt ist, sodass sich dieses in der Aufnahmevertiefung (9) festklemmt.

2. Vorrichtung nach Anspruch 1, **dadurch gekennzeichnet, dass** ein vorzugsweise einteiliger Haltebügel (1) vorgesehen ist der an einem Ende die Halterung aufweist und im anderen Endbereich mit der Aufnahmevertiefung (9) für das Band bzw. Seil (4) versehen ist.

3. Vorrichtung zur Sicherung der Vorratswickel bzw. der Leporellopackungen von Spanngurten nach den Ansprüche 1 und 2, **dadurch gekennzeichnet, dass** der Haltebügel (1) aus einem Formstück aus entsprechend steifem Stangen- oder Drahtmaterial besteht, bei dem an dem einen Ende die Halterung (8) und am anderen Ende eine die Aufnahmevertiefung (9) bestimmende, z. B. V-oder U-Hakenförmige Ausbiegung (7) vorgesehen ist, wobei die Länge des Haltebügels (1) zwischen Aufnahmevertiefung (9) und Ausbiegung (7) der Gurtbreite entspricht.

4. Vorrichtung nach Anspruch 3, **dadurch gekennzeichnet, dass** die Halterung ebenfalls durch eine Ausbiegung (8) des Formstückes (1) bestimmt ist und die Stange bzw. der Draht im Endbereich der Ausbiegung (7, 8) ein an die Vertiefung (9) anschließendes schräg nach außen weisendes Schenkelende (10, 11) als Einführungshilfe für das Gummiseil (4) aufweist.

## Geänderte Patentansprüche

### Geänderte Patentansprüche gemäss Regel 137(2) EPÜ.

**1.** Vorrichtung (1, 4) zur Fixierung der Vorratswickel oder Leporellopackungen von Spanngurten (6) zur Lastsicherung beim Transport und zum Zusammenhalten bzw. zur Fixierung von Einzelelementen, **dadurch gekennzeichnet, dass** die Vorrichtung ein mit dem einen Endbereich an einer Halterung (8) befestigbares gummielastisches Band oder Gummiseil (4) aufweist, das um den zu sichernden Vorratsteil (6) der Spanngurte bzw. um die Einzelelemente spannbar und in der Spannstellung bei als Handhabe dienendem anderem Endbereich (4a) in eine Aufnahmevertiefung (9) eines Halteelementes (7) einhängbar ist und dass die Lichtweite der Aufnahmevertiefung (9) im Fixierungsbereich kleiner als der Durchmesser des entspannten Bandes bzw. Seiles (4) gewählt ist, sodass bei Freigabe des herausragenden Teiles des Endbereiches vom Band bzw. Seil dieser Teil wieder die ursprüngliche Dicke einnimmt und sich das Band bzw. Seil in der Aufnahmevertiefung (9) festklemmt.

**2.** Vorrichtung nach Anspruch 1, **dadurch gekennzeichnet, dass** ein Haltebügel (1) vorgesehen ist der an einem Ende die Halterung aufweist und im anderen Endbereich mit der Aufnahmevertiefung (9) für das Band bzw. Seil (4) versehen ist.

**3.** Vorrichtung zur Sicherung der Vorratswickel bzw. der Leporellopackungen von Spanngurten nach den Ansprüche 1 und 2, **dadurch gekennzeichnet, dass** der Haltebügel (1) aus einem Formstück aus entsprechend steifem Stangen- oder Drahtmaterial besteht, bei dem an dem einen Ende die Halterung (8) und am anderen Ende eine die Aufnahmevertiefung (9) bestimmende, z. B. V- oder U-Hakenförmige Ausbiegung (7) vorgesehen ist, wobei die Länge des Haltebügels (1) zwischen Aufnahmevertiefung (9) und Ausbiegung (7) der Gurtbreite entspricht.

**4.** Vorrichtung nach Anspruch 3, **dadurch gekennzeichnet, dass** die Halterung ebenfalls durch eine Ausbiegung (8) des Formstückes (1) bestimmt ist und die Stange bzw. der Draht im Endbereich der Ausbiegung (7, 8) ein an die Vertiefung (9) anschließendes schräg nach außen weisendes Schenkelende (10, 11) als Einführungshilfe für das Gummiseil (4) aufweist.
